# EUROPEAN PATENT APPLICATION

(11) **EP 3 628 512 A1**
(43) Date of publication of application: **01.04.2020**
(21) Application number: 18197053.4
(22) Date of filing: 27.09.2018
(51) Int. Cl.: B60C 13/00, G01L 17/00, B60C 23/06, B60C 25/00

(54) **TYRE INFLATION PRESSURE MONITORING**

(71) Applicant: Bridgestone Europe NV/SA, 1932 Zaventem (BE)
(72) Inventor: PEZZULLO, Giuseppe, 00128 Roma (IT)
(74) Representative: Marchetti, Alessio

(57) **Abstract**

A tyre 1 has a marking 2 on its sidewall 3. The marking 2 has a dimension in the tyre radial direction and a dimension in the tyre circumferential direction which are equal when the tyre 1 is at the recommended inflation pressure. The marking is provided in the maximum strain area of the sidewall 3 of the tyre 1, that is in the range of 70%-80% of the tyre section height. This means that the marking 2 deforms in the tyre radial direction but not in the tyre circumferential direction when the inflation pressure is changed by an amount sufficient to be visible by a user.

## Description

The present invention relates to tyre inflation pressure monitoring.

The inflation pressure of a tyre has a significant bearing on the performance of the tyre, particularly the durability of the tyre.

Tyre manufacturers recommend that users check the inflation pressure of their tyres periodically to ensure that the pressure is correct, especially before the start of a journey.

Tyre inflation pressures are typically measured using a pressure gauge, either at home or in a roadside filling station.

Korean Utility Model KR20-2009-0002911 discloses a tyre having air pressure check pieces incorporated into the sidewall of the tyre. The width of the air pressure check pieces in the tyre radial direction changes according to the inflation pressure of the tyre. This means that the user can visually determine the inflation pressure of the tyre by looking at the sidewall of the tyre.

The inventor of the present invention has discovered that sidewall strain in the tyre radial direction is proportional to the tyre inflation pressure, but sidewall strain in the tyre circumferential direction does not vary according to inflation pressure. The inventor has found that an improved tyre having a particular marking on its sidewall can be provided. The marking has a dimension in the tyre radial direction and a dimension in the tyre circumferential direction which are equal when the tyre is at the recommended inflation pressure.

As the dimensions of the marking are equal when the tyre is at the recommended inflation pressure, the user can easily compare the dimensions to determine whether they are equal just by looking at the marking. If the dimensions are unequal, the user can tell that the tyre is not at the recommended inflation pressure (e.g. is underinflated), and can take action to e.g. increase the inflation pressure. This is more convenient than known markings because the user can immediately tell whether the tyre is underinflated.

Rather than comparing the dimensions of the marking by eye, the user may employ a smartphone to take a photograph of the marking which the smartphone uses to compare the dimensions more accurately.

Preferably, the marking is arranged to deform in the tyre radial direction by at least 3% for a change of inflation pressure of the tyre from the recommended inflation pressure to 21% below the recommended inflation pressure when the tyre is loaded in the tyre radial direction.

The marking is preferably provided in the maximum strain area of the sidewall of the tyre. For example, the marking is at least partly or completely in the range of 65%-85%, more preferably in the range of 70%-80%, of the tyre section height. The section height is the total distance from the innermost part of the tyre in the tyre radial direction (for example, the bead toe) to the outermost part of the tyre in the tyre radial direction (for example, the middle of the tread).

A first aspect of the present invention provides a tyre having a marking on its sidewall, the marking having a dimension in the tyre radial direction and a dimension in the tyre circumferential direction which are equal when the tyre is at the recommended inflation pressure, the marking being provided in the maximum strain area of the sidewall of the tyre.

When the dimensions of the marking in the tyre radial and tyre circumferential direction are equal the tyre is at the recommended inflation pressure. The user can easily ascertain that this is the case using visual inspection alone. The user can equally compare the dimensions of the marking in the radial and circumferential tyre directions and easily tell when these dimensions are unequal, indicating under or over-inflation of the tyre.

Conveniently, the tyre is loaded by weight of the vehicle when the tyre is installed on the vehicle. When the inflation pressure is low, the weight of the vehicle causes the sidewall to deform which deforms the marking from its shape when the inflation pressure is the recommended inflation pressure. The user can see that the marking is deformed and can tell that the inflation pressure is low.

A second aspect of the present invention provides a tyre having a marking on its sidewall, the marking having a dimension in the tyre radial direction and a dimension in the tyre circumferential direction which are equal when the tyre is at the recommended inflation pressure, the marking being arranged to deform in the tyre radial direction by at least 3% for a change of inflation pressure of the tyre from the recommended inflation pressure to 21% below the recommended inflation pressure when the tyre is loaded in the tyre radial direction.

With the marking deforming by at least 3% for a change in pressure of 21% from recommended pressure, it is possible for the user to see the deformation and tell that the pressure is low.

Here, the sidewall is the area inside in the tyre radial direction from the axial outer ends of the tread.

In the prior art, it is known to provide markings on sidewalls of tyres. However, the markings do not deform by at least 3% for a change in pressure of 21% from recommended pressure, and so the deformation of the markings is not visible to the user.

The recommended inflation pressure is a pressure prescribed by the tyre manufacturer or by industrial standards. The pressure may be within a range up to a maximum recommended inflation pressure. The recommended inflation pressure is when the tyre is loaded as prescribed by the tyre manufacturer or as prescribed by industrial standards, e.g. when the tyre is loaded at given percentage of the maximum rated load for the inflation pressure. Alternately, the inflation pressure may be the pressure recommended by the tyre manufacturer when the tyre is at a load of 50%-80% of the maximum load dictated by the load index of the tyre.

The "industrial standards" refer to industrial standards effective in a region where the tire is used, for example, JATMA YEAR BOOK published by the Japan Automobile Tire Manufacturers Association, Inc. (JATMA) in Japan, in STANDARDS MANUAL of the European Tire and Rim Technological Organization (ETRTO) in Europe, and in YEAR BOOK of the Tire and Rim Association, Inc. (TRA) in the US.

The marking may be provided in a single piece, or may be provided in separate pieces, that is with areas of sidewall between the pieces.

Preferably, the dimensions are the maximum dimensions of the marking. More preferably, the marking is provided in a single piece, and the dimensions are the maximum dimensions of the single piece.

Preferably, the deformation when the tyre is loaded in the tyre radial direction increases the size of the marking.

Preferably, the marking is arranged to deform in the tyre radial direction by at least 8% for a change of inflation pressure of the tyre from the recommended inflation pressure to 42% below the recommended inflation pressure when the tyre is loaded in the tyre radial direction.

Preferably, the marking is arranged to deform in the tyre radial direction by at least 18% for a change of inflation pressure of the tyre from the recommended inflation pressure to 63% below the recommended inflation pressure when the tyre is loaded in the tyre radial direction.

Preferably, the marking is arranged to deform in the tyre radial direction by at least 38% for a change of inflation pressure of the tyre from the recommended inflation pressure to 83% below the recommended inflation pressure when the tyre is loaded in the tyre radial direction.

For low strains (i.e. up to 10%) the marking will deform in proportion to the strain. For example, for a strain of 10%, the marking will deform by 10%. For higher strains, the deformation may be less than the amount of strain.

The marking is preferably in the maximum strain area of the sidewall of the tyre. For example, the marking is at least partly or completely in the range of 65%-85%, more preferably in the range of 70%-80%, of the tyre section height.

The section height is the total distance from the innermost part of the tyre in the tyre radial direction (for example, the bead toe) to the outermost part of the tyre in the tyre radial direction (for example, the middle of the tread).

Conveniently, the marking has a different colour from the sidewall. This means the user can see the marking more easily.

The marking may be arranged to deform by a certain percentage for a certain change in pressure as referred to above when the tyre is loaded in the tyre radial direction by 80% of the maximum load dictated by the load index of the tyre.

Alternatively, the marking may be arranged to deform by a certain percentage for a certain change in pressure as referred to above when the tyre is loaded in the tyre radial direction by 50% of the maximum load dictated by the load index of the tyre.

Alternatively, the marking may be arranged to deform by a certain percentage for a certain change in pressure as referred to above when the tyre is loaded in the tyre radial direction by 100% of the maximum load dictated by the load index of the tyre.

The load index is prescribed by the above-mentioned industrial standards.

Preferably, the marking comprises a circle or a square. The marking may be provided in a single piece as a circle or square, or in separate pieces as separate circles or squares. For example, four circles or squares may be provided, two along a tyre radial direction and two along a tyre circumferential direction, the four circles or squares forming a diamond shape. During deformation, the distance between the circles or squares along the tyre radial direction will change, but the distance between the circles or squares along tyre circumferential direction will not. If the marker is a square the tyre radial direction may bisect the square.

More generally the marking may comprise a plurality of smaller markings spanning an area, wherein the maximum radial dimension of the area is equal to the maximum circumferential dimensions when the tyre is at a recommended inflation pressure

More generally, the marking, irrespective of whether it is provided as a single marking or comprises plural individual markings as discussed above, may be of a nature that is mirror symmetric about a line that extends at 45° to the radial direction.

The marking may comprise a diamond. The marking may be provided in a single piece as a diamond. The tyre radial direction may bisect the diamond.

Preferably, the tyre includes an indication that the marking is for determining the inflation pressure of the tyre.

As discussed above, the marking may be fully or partially in the maximum strain area of the sidewall of the tyre. Whilst markings with a size that is much smaller than the radial size of the maximum strain area, say markings that have a radial dimension that is less than 50%, preferably less than 25% of the radial dimension of the maximum strain area are preferably entirely located within the maximum strain area, markings that have a size similar or larger than the maximum strain area can be partially located outside of the maximum strain area. This does not impact the utility of the present invention as those parts of the marking that are in the maximum strain area of the tyre will still deform more strongly in the tyre radial direction than in the tyre circumferential direction, thus enabling determination of the state of tyre inflation, not least when the electronic aids described herein are used. Preferably the maximum extent of the marking in the tyre circumferential direction is located in the maximum strain region of the tyre.

The present invention is applicable to all types of pneumatic tyres, for example car tyres, motorcycle tyres, bicycle tyres, heavy duty tyres, aircraft tyres and the like.

The user can determine whether the tyre is correctly inflated by comparing the dimensions of the marking when the marking is directly below the central axis of the tyre.

Whilst the above discussion has focussed on markers that have equal radial and circumferential dimensions when the tyre is inflated at a recommended pressure it will be appreciated that the marker can be configured to have unequal dimensions when the tyre is inflated at a recommended pressure (for example so that the circumferential dimension is larger than the radial dimension when the tyre is inflated at a recommended pressure) and changes shape when the tyre is underinflated so that a user can, based on visual inspection or with the help of a means for processing an image of the marker, determine that the tyre is underinflated on the basis of the relative dimensions of the marker. This may be particularly advantageous in situations in which dangerous underinflation is to be indicated. In such situations the marker can be dimensioned so that the radial and circumferential dimensions are equal when the given value of dangerous underinflation has been reached.

According to another aspect of the invention there is provided a computer-implemented method of determining whether a tyre has the correct inflation pressure. The method is performed in a device comprising a processor and a memory. The memory stores computer executable instructions. The instructions, when executed by the processor, cause the device to compare a value of a dimension in the tyre radial direction of a marking on the sidewall of the tyre with a value of a dimension in the tyre circumferential direction of the marking on the sidewall of the tyre and based on the comparison result, determine whether or not the tyre has the correct inflation pressure.

The tyre may be any of the tyres as referred to above, for example according to the first or second aspect of the present invention.

The instructions, when executed by the processor, may further cause the device to obtain from a user information on the particular tyre, obtain from a database information on the deformation behaviour of the sidewall of the particular tyre, and based on the information obtained from the user and database and the comparison result of the dimensions of the marking, determine an inflation pressure of the tyre and/or whether or not the tyre is inflated at a recommended inflation pressure.

The instructions, when executed by the processor may further cause the device to output an indication of whether or not the tyre is inflated at a recommended inflation pressure and/or a determined tyre pressure.

The method may be implemented in a smartphone.

The values of the dimensions of the marking may be obtained from a photograph of the tyre. The device executing the instructions may comprise a camera and the instructions may be configured to cause or assist the device in using the camera to acquire a photograph of the tyre.

The instructions, when executed by the processor, may further cause the device to compare the comparison result with a predetermined threshold value, and depending on whether the comparison results exceeds the predetermined threshold value, determine whether or not the tyre has the correct inflation pressure. The predetermined threshold value may be stored in a memory of the device.

The instructions, when executed by the processor may further cause the device to receive an indication of the loading condition of the tyre, obtain from a database information on the deformation behaviour of the sidewall of the particular tyre under the loading condition of the tyre and ,based on the information received and obtained and the comparison result of the dimensions of the marking, determine an actual inflation pressure of the tyre and/or whether or not the tyre is inflated at a recommended inflation pressure.

The instructions may cause the device to display a means, such as a graphical user interface, prompting or enabling a user to input a loading condition of the tyre and to receive an input provided by the user.

The information requested/received from the user may be car model specific and may, for example, include the model of the car, the year in which it was manufactured. The information may further include information identifying the type and/or model of the tyre. The information may, additionally or alternatively, include information of the loading condition of the car.

Information regarding the type, make and age of either or both of the car and the tyre is particularly advantageous in arrangements in which information regarding deformation behaviour is acquired from a database. In such arrangements the information requested from the database can be specifically requested for the type, make and age of the tyre and/or the car, reducing the transmissions bandwidth required for transmitting the requested information and ensuring that up to date information can be retrieved from the database.

The information on deformation behaviour of the sidewall of the tyre may be provided in the form of a look-up-table, so that a simple look up operation can be used to determine tyre pressure and/or an indication of whether or not the tyre is inflated to the recommended inflation pressure

According to another aspect of the present invention there is provided computer executable code which, when executed in a device comprising processor, causes the processor to perform a method as described above. The computer executable code may be stored in non-volatile memory.

According to another aspect of the present invention there is provided a computing device comprising a processor and memory storing instructions for execution by the processor, the instructions, when executed by the processor, causing the device to perform a method as described above.

The device may be configured to obtain, from a database, information on the deformation behaviour of the sidewall of a tyre under investigation. The database may be located remote from the device. The device may be configured to connect to the database using remote data connection. This remote data connection may be established via a network, such as the internet, or any other suitable remote data transmission link. The device may be configured to store the information obtained from the database in non-volatile memory in the device for future reference.

According to another aspect of the present invention there is provided a system comprising a device as described above and further a database storing information on the deformation behaviour of the sidewall of the particular tyre under the loading condition of the tyre. The database may be configured to receive a request for transmission of stored information to the device and to, following receipt of said request, transmit requested stored information to the device.

Preferred embodiments of the invention will now be described, purely as examples, with reference to the drawings in which:
FIG.1 is fragmentary side elevation view of a tyre of a first embodiment showing the sidewall of the tyre;
FIG. 2 is a fragmentary side elevation view of the tyre of FIG. 1 showing a marking in deformed and non-deformed form;
FIG. 3 is a graph showing the relationship between the sidewall maximum surface strain (%) and the tyre inflation pressure (bar) for a particular tyre under load.
FIG. 4 is a side elevation view of a piece of a tyre according to a second embodiment of the invention.
FIG. 5 illustrates a method of determining whether or not a tyre has the correct inflation pressure;
FIG. 6 is a flowchart showing the steps carried out as described above with reference to FIG. 5;
FIG. 7 shows a system for carrying out the steps of FIGs. 5 and 6;
FIG. 8 is a graph showing the radial surface strain and sidewall profile of a tyre under load for the deflected section height of the tyre;
FIG. 9 is a graph showing the sidewall profile of a tyre under load for the deflected section height of the tyre at different pressures; and
FIG. 10 is magnified view of the graph of FIG. 9 with a smaller range of deflected lateral coordinates.

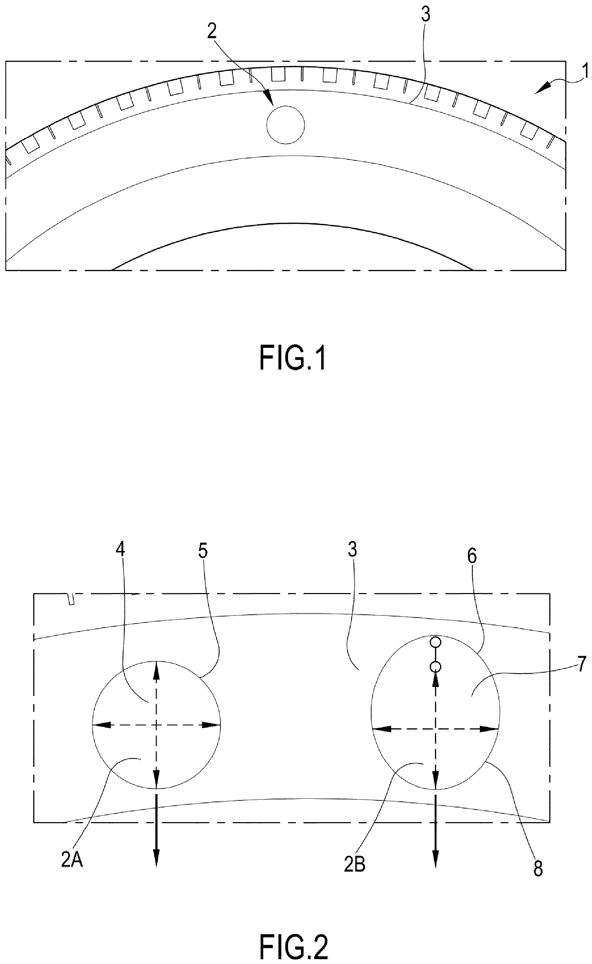

Referring to FIG. 1, part of a tyre 1 is shown. The tyre 1 has a sidewall 3 with a marking 2 provided on the sidewall 3. The marking 2 shown in FIG. 1 is circular in the present embodiment. The tyre 1 is not installed on a rim and simply illustrates the arrangement of the marking 2 on the sidewall 3.

Referring to FIG. 2, on the left is a marking 2A which is circular and non-deformed, and on the right is a marking 2B which is oval and deformed. In FIG 2, the markings 2A nd 2B are on the top of the tyre 1. However, in practice, the deformed marking 2B would be on the bottom of the tyre rather than the top (i.e. directly below the central axis of the tyre), because the weight of the vehicle from above deforms the sidewall 3 and marking 2 below the rim.

The left marking 2A has a dimension 5 in the tyre radial direction and a dimension 4 in the tyre circumferential direction. In the left marking 2A, the dimensions 4, 5 are equal. The right marking 2B has a dimension (6+7) in the tyre radial direction and a dimension 8 in the tyre circumferential direction. In the right marking 2B, the dimensions (6+7), 8 are unequal.

When the tyre 1 is installed on a vehicle and at the recommended inflation pressure, the marking 2 has the shape of the left marking 2A shown in FIG. 2, i.e. circular with the dimensions 4, 5 equal. In this embodiment, the recommended inflation pressure is the pressure recommended by the vehicle manufacturer for a fully loaded vehicle. In another embodiment, the recommended inflation pressure is the pressure recommended by the tyre manufacturer when the tyre is loaded in the tyre radial direction by 80% of the maximum load dictated by the load index of the tyre.

On the other hand, when the tyre 1 is installed on a vehicle and below the recommended inflation pressure, the marking 2 deforms from the shape of the left marking 2A according to the inflation pressure. The weight of the vehicle acts to load the tyre 1 in the radial direction to deform the sidewall 3 and marking 2. In FIG. 2, the marking 2B on the right has deformed so as that its dimension in the tyre radial direction has increased by amount 6. The dimension 8 in the tyre circumferential direction has remained the same.

The user can compare by eye the dimension (6+7) in the tyre radial direction and the dimension 8 in the tyre circumferential direction, and the user can see that they are unequal. The user has been informed beforehand that, in the event that the dimensions (6+7), 8 are unequal, the tyre 1 is inflated below the recommended inflation pressure. The user can then inflate the tyre 1.

It is important that the marking 2 deforms sufficiently to be visible to the user when the tyre is underinflated. The marking 2 is arranged to deform in the tyre radial direction by at least 3% for a change of inflation pressure of the tyre from the recommended inflation pressure to 21% below the recommended inflation pressure when the tyre is loaded in the tyre radial direction. This amount of deformation can be achieved by positioning the marking in the maximum strain area of the sidewall of the tyre 1, for example in the range of 65%-85% of the tyre section height.

Instead of comparing the radial and circumferential dimensions of the marking 2 by eye, a smartphone can be used to compare the dimensions more accurately. For example, a photograph of the tyre 1 and marking 2 can be taken with the camera of the smartphone. The smartphone can take the dimensions of the marking 2 from the photograph, compare the values and display the difference. Additionally, the smartphone can compare the difference with a threshold value. If the difference exceeds the threshold value, the smartphone can judge that the tyre 1 is underinflated. The smartphone can then inform the user that the user should inflate the tyre 1.

For a particular tyre 1 and loading, the amount of deformation can be used to estimate the actual pressure of the tyre. A computer can be used to determine for a particular tyre 1 and loading, based on the difference between the tyre radial and circumferential dimensions of the marking 2, the actual inflation pressure of the tyre 1. The computer can display this actual inflation pressure for the user.

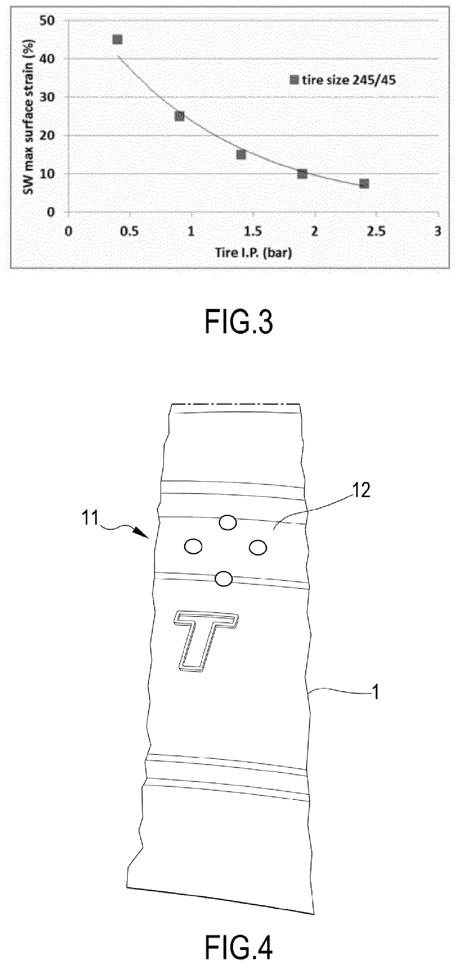

FIG. 3 is a graph showing the relationship between the sidewall maximum surface strain (%) and the tyre inflation pressure (bar) for a particular tyre under load. The strain is caused by the weight of the vehicle acting on the tyre. It can be seen that the sidewall strain has an exponential, not linear, relationship with the tyre inflation pressure. For example, for a pressure change from 2.4 bar to 1.9 bar, the sidewall strain is about 3%. 2.4 bar to 1.9 bar is typically the region of recommended inflation pressure for a car tyre. On the other hand, from 0.9 bar to 0.4 bar, the sidewall strain is about 20%. In this region a typical car tyre would be severely under-inflated.

In FIG. 4 a tyre 10 has a marking 12 on its sidewall 11. The marking 12 is a set of circles arranged in diamond shape, with a circle at each corner of the diamond. The dimension of the marking 12 in the tyre radial direction (in particular, the maximum dimension i.e. between the top of the highest circle and the bottom of the lowest circle) changes according to the inflation pressure of the tyre 10. However, the dimension in the tyre circumferential direction (in particular, the maximum dimension i.e. between the left edge of the left circle and the right edge of the right circle) stays the same irrespective of the inflation pressure of the tyre 10.

**Table 1**

| **Applied strain (%)** | **sample1** | | **sample2** | |
|---|---|---|---|---|
| | **length (%)** | **width (%)** | **length (%)** | **width (%)** |
| 0 | 100 | 100 | 100 | 100 |
| 10 | 110 | 100 | 110 | 100 |
| 21 | 117 | 100 | 115 | 100 |

Table 1 shows the results of laboratory tests on tyre samples. The table show length (in the tyre radial direction) and the width (in the tyre circumferential direction) for the markings of two samples for different strains applied. It can be seen that for low strains (i.e up to 10%) the marking will deform in the tyre radial direction in proportion to the strain. For example, for a strain of 10%, the marking will deform by 10%. For higher strains, the deformation is less than the amount of strain. For example, for a strain of 21%, the marking will deform by 17 or 15%.

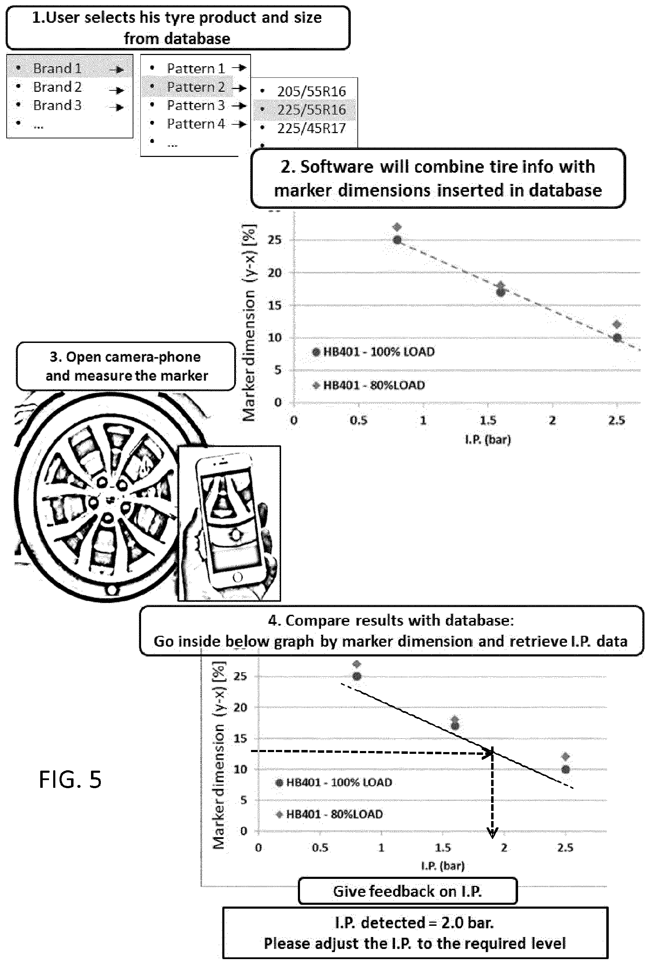

FIG. 5 shows how a user can use a smartphone (camera-phone) to judge whether or not the tyre has the correct inflation pressure.

Referring to FIG. 5, the user selects on the smartphone the particular tyre that he is using. Next, either the user will select the loading condition of the tyre (e.g. 50%, 80% or 100% of the maximum load dictated by the load index of the tyre) or the smartphone will assume that the loading condition of the tyre is 80% of the maximum load dictated by the load index of the tyre. The user will then take a photograph of the marking on the sidewall with the smartphone. The smartphone measures the dimensions of the marking in the radial and circumferential directions from the photograph. The smartphone compares the dimensions to determine any difference between the dimensions. If there is a difference, the smartphone determines the inflation pressure that corresponds to that difference. The pressure is displayed on the screen of the smartphone. The difference between dimensions is compared a threshold value. If the difference exceeds the threshold value, the smartphone displays a message to the user to adjust the inflation pressure to the required level. Otherwise, the smartphone displays a message to the user that the inflation pressure is acceptable.

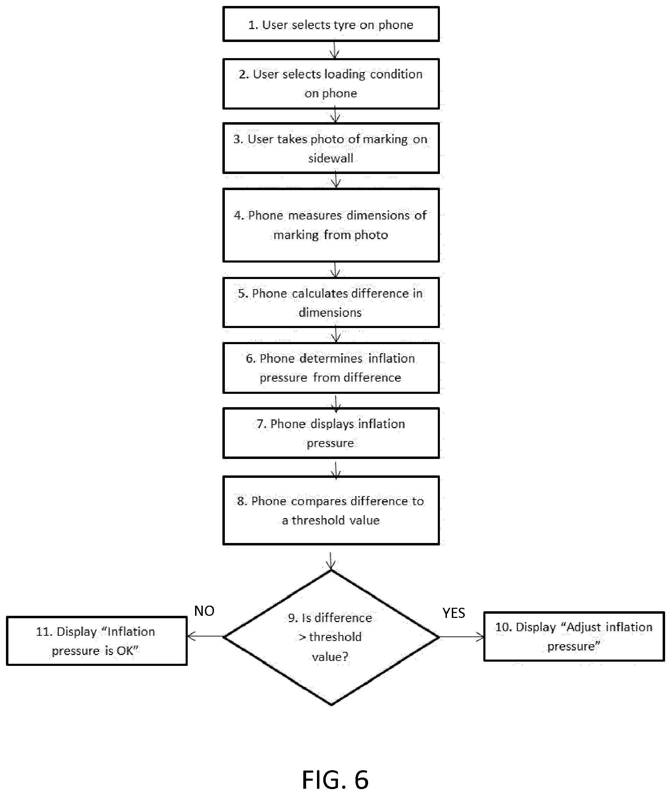

The assumption that the loading condition of the tyre is 80% of the maximum load dictated by the load index of the tyre is possible for the following reasons. The influence on the deformation resulting from a load variation is much smaller than the influence of a pressure variation, as can be seen from the graphs in FIG. 5. In those graphs, the trend at 80% and 100% of the maximum load a very close to each other. FIG. 6 is a flowchart showing an example of the steps carried out as described above with reference to FIG. 5.

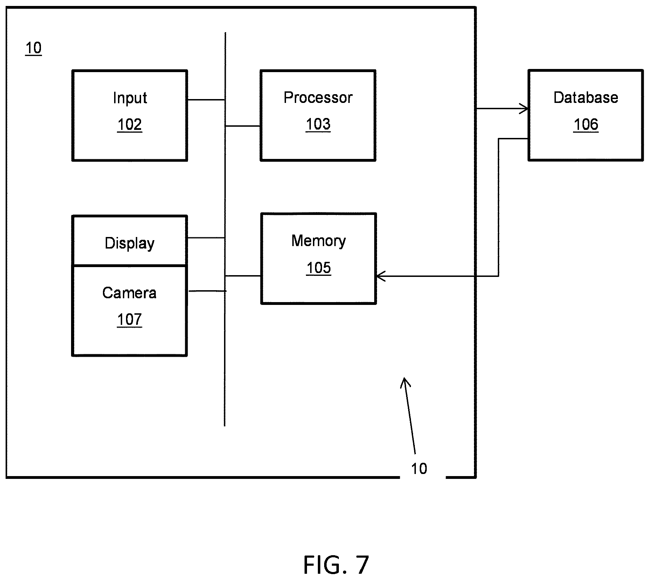

Referring FIG. 7, a system 100 comprises a computing device 101 and a database 106. The computing device 101 comprises a processor 103 and memory 105 storing instructions for execution by the processor 103. The instructions, when executed by the processor 103, cause the device 101 to carry out the steps described above with reference to FIG. 5. In the present embodiment, the computing device 101 is a smartphone. The user can use the input 102 to select the tyre and loading condition of the tyre. The user can use the camera 107 to take a photo of the marking on the tyre sidewall. The processor 103 measures dimensions of the marking from the photo and calculates the difference in dimensions.

The computing device 101 obtains from the database 106 information on the deformation behaviour of the sidewall of the particular tyre and stores the information in the memory 105. The device 101 determines the inflation pressure from the difference in dimensions and from the information stored in the memory 105. The inflation pressure is displayed on the display 104. The device 101 compares the difference to a threshold value stored in the memory 105. If the difference is greater than the threshold value, the display 104 displays a message to the user to adjust the inflation pressure to the required level. Otherwise, the display 104 displays a message to the user that the inflation pressure is acceptable.

Whilst a particular series of steps has been described above, it will be appreciated that the described order of steps is not essential. For example, the method may only request user input after an image of the tyre has been taken or may contact a database following user input but before the image of the marking has been acquired.

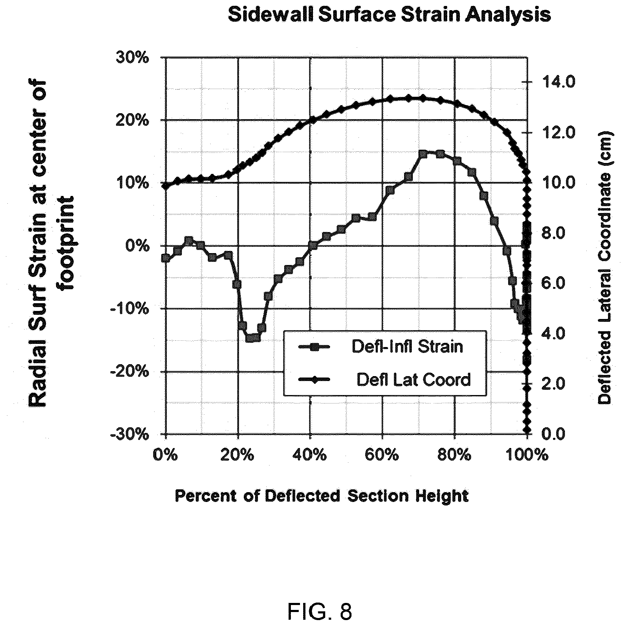

FIG. 8 is a graph showing the radial surface strain and sidewall profile of a tyre under load for the deflected section height of the tyre from the innermost part of the tyre in the tyre radial direction. In particular, the curve with squares shows how the radial surface strain of the sidewall (measured on the left vertical axis) varies with deflected section height of the sidewall (measured on the horizontal axis). The curve with diamonds shows how the sidewall profile of the tyre (measured on the right vertical axis, from the tyre equator) varies with deflected section height of the sidewall (measured on the horizontal axis). The maximum strain area (at the peak of the curve with squares) is at 70-75% of the deflected section height.

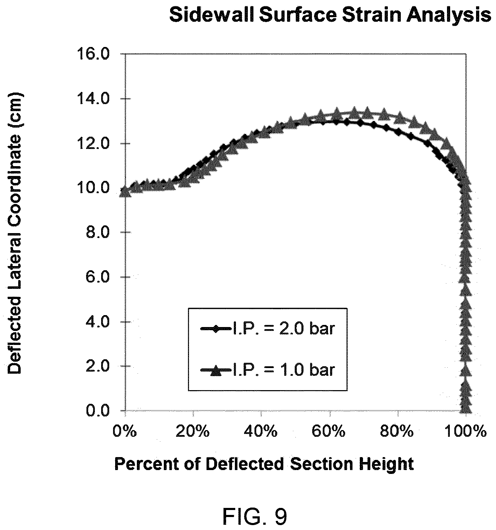

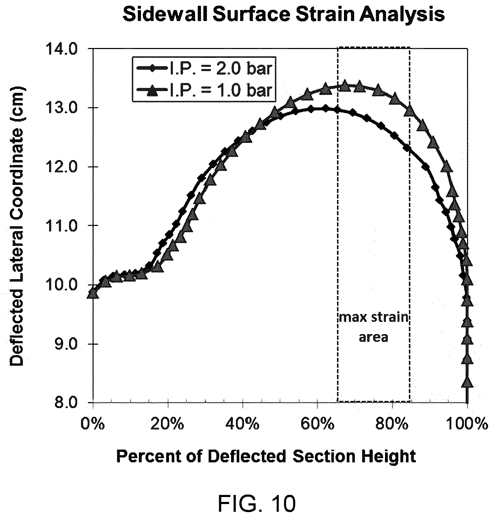

FIGS. 9 and 10 are graphs showing the sidewall profile of a tyre under load for the deflected section height of the tyre at different pressures. The deflected section height is measure from the innermost part of the tyre in the tyre radial direction. It can be seen that at a lower pressure (1.0 bar) the sidewall deflects further from the tyre equator than at higher pressure (2.0 bar). The deflection is a result of the weight for the vehicle on the sidewall. This larger deflection corresponds to a higher deformation and strain on the sidewall. FIG. 10 also shows the maximum strain area of the sidewall, where the difference in deflection is largest.

Whilst certain embodiments have been described, these embodiments have been presented by way of example only, and are not intended to limit the scope of the inventions. Indeed, the novel devices, and methods described herein may be embodied in a variety of other forms; furthermore, various omissions, substitutions and changes in the form of the devices, methods and products described herein may be made without departing from the spirit of the inventions. The accompanying claims and their equivalents are intended to cover such forms or modifications as would fall within the scope and spirit of the inventions.

## Claims

1. A tyre having a marking on its sidewall,
the marking having a dimension in the tyre radial direction and a dimension in the tyre circumferential direction which are equal when the tyre is at a recommended inflation pressure,
the marking being provided in the maximum strain area of the sidewall of the tyre.

2. A tyre according to claim 1, wherein the marking is at least partly or completely in the range of 65%-85% of the tyre section height.

3. A tyre according to claim 1, wherein the marking is at least partly or completely in the range of 70%-80% of the tyre section height.

4. A tyre according to any preceding claim, wherein the marking has a different colour from the sidewall.

5. A tyre according to any preceding claim, wherein the marking comprises a circle or a square.

6. A tyre according to any preceding claim, wherein the marking comprises a plurality of smaller markings spanning an area, wherein the maximum radial dimension of the area is equal to the maximum circumferential dimensions when the tyre is at a recommended inflation pressure.

7. A tyre having a marking on its sidewall,
the marking having a dimension in the tyre radial direction and a dimension in the tyre circumferential direction which are equal when the tyre is at the recommended inflation pressure,
the marking being arranged to deform in the tyre radial direction by at least 3% for a change of inflation pressure of the tyre from the recommended inflation pressure to 21% below the recommended inflation pressure when the tyre is loaded in the tyre radial direction.

8. A tyre according to claim 7, wherein marking is arranged to deform as claimed when the tyre is loaded in the tyre radial direction by 80% of the maximum load dictated by the load index of the tyre.

9. A tyre according to claim 7, wherein marking is arranged to deform as claimed when the tyre is loaded in the tyre radial direction by 50% of the maximum load dictated by the load index of the tyre.

10. A tyre according to claim 7, wherein marking is arranged to deform as claimed when the tyre is loaded in the tyre radial direction by 100% of the maximum load dictated by the load index of the tyre.

11. A computer-implemented method of determining whether a tyre has the correct inflation pressure, the method performed in a device comprising a processor and a memory, the memory storing computer executable instructions, the instructions, when executed by the processor, causing the device to:
compare a value of a dimension in the tyre radial direction of a marking on the sidewall of the tyre with a value of a dimension in the tyre circumferential direction of the marking on the sidewall of the tyre, and
based on the comparison result, determine whether or not the tyre has the correct inflation pressure.

12. A method according to claim 11, the instructions, when executed by the processor, further causing the device to:
obtain from a user information on the particular tyre;
obtain from a database information on the deformation behaviour of the sidewall of the particular tyre, and
based on the information obtained from the user and database and the comparison result of the dimensions of the marking, determine an inflation pressure of the tyre and/or whether or not the tyre is inflated at a recommended inflation pressure.

13. A method according to claim 11 or 12, the instructions, when executed by the processor, further causing the device to:
output an indication of whether or not the tyre is inflated at a recommended inflation pressure and/or a determined tyre pressure.

14. A method according to any one of claims 11 to 13, the instructions, when executed by the processor, further causing the device to:
compare the comparison result with a threshold value, and depending on whether the comparison results exceeds the threshold value, determine whether or not the tyre has the correct inflation pressure.

15. A method according to any one of claims 11 to 14, the instructions, when executed by the processor, further causing the device to:
receive an indication of the loading condition of the tyre;
obtain from a database information on the deformation behaviour of the sidewall of the particular tyre under the loading condition of the tyre, and
based on the information received and obtained and the comparison result of the dimensions of the marking, calculate the actual inflation pressure of the tyre.

16. A non-volatile memory comprising computer executable code which, when executed in a device comprising processor, causes the processor to perform a method of any of claims 11 to 15.

17. A computing device comprising a processor and memory storing instructions for execution by the processor, the instructions, when executed by the processor, causing the device to perform a method of any of claims 11 to 15.

18. A device as claimed in claim 17, the device configured to obtain from a database information on the deformation behaviour of the sidewall of a tyre under investigation.

19. A system comprising a device as claimed in claim 17 or 18 and further comprising a database storing information on the deformation behaviour of the sidewall of the particular tyre under the loading condition of the tyre, the database configured to receive a request for transmission of stored information to the device and to, following receipt of said request, transmit requested stored information to the device.
